# EUROPEAN PATENT SPECIFICATION

(11) **EP 3 010 615 B1**
(45) Date of publication and mention of the grant of the patent: **28.09.2022**
(21) Application number: 14739626.1
(22) Date of filing: 19.06.2014
(51) Int. Cl.: B01D 11/04, C07F 9/48

(54) **PROCESS FOR THE RECOVERY OF DIPHOSPHONITE CONTAINING COMPOUNDS USING MULTISTAGE COUNTERCURRENT LIQUID-LIQUID EXTRACTOR WITH MIXER-SETTLER AND HEAVY PHASE RECYCLE**
VERFAHREN ZUR RÜCKGEWINNUNG VON DIPHOSPHONITHALTIGEN VERBINDUNGEN MITTELS EINES MEHRSTUFIGEN GEGENSTROM-FLÜSSIG-FLÜSSIG-EXTRAKTORS MIT MISCH-ABSETZER UND RÜCKFÜHRUNG DER SCHWEREN PHASE
PROCÉDÉ DE RÉCUPÉRATION DE COMPOSÉS CONTENANT DU DIPHOSPHONITE AU MOYEN D'UN EXTRACTEUR LIQUIDE-LIQUIDE À CONTRE-COURANT À PLUSIEURS ÉTAGES AVEC UN MÉLANGEUR-DÉCANTEUR ET RECYCLAGE DE LA PHASE LOURDE

(30) Priority: 20.06.2013 US 201361837450 P
(43) Date of publication of application: 27.04.2016
(73) Proprietor: INVISTA Textiles (U.K.) Limited, Manchester M2 3DE (GB)
(72) Inventor: TENN III, William, J., Beaumont, TX 77706 (US)
(74) Representative: Carpmaels & Ransford LLP
(86) International application number: PCT/US2014/043125
(87) International publication number: WO 2014/205183

(56) References cited:
- GB-A- 835 282
- GB-A- 1 416 390
- US-A- 4 290 880
- US-A1- 2008 083 607

## Description

### FIELD OF THE INVENTION

The invention relates to recovery of diphosphonite-containing compounds from a feed mixture comprising diphosphonite-containing compounds, organic mononitriles and organic dinitriles using liquid-liquid extraction.

### BACKGROUND OF THE INVENTION

It is well known in the art that complexes of nickel with phosphorouscontaining ligands are useful as catalysts in hydrocyanation reactions. Such nickel complexes using monodentate phosphites are known to catalyze hydrocyanation of butadiene to produce a mixture of pentenenitriles. These catalysts are also useful in the subsequent hydrocyanation of pentenenitriles to produce adiponitrile, an important intermediate in the production of nylon. It is further known that bidentate phosphite, phosphonite and phosphinite ligands can be used to form nickel-based catalysts to perform such hydrocyanation reactions.

U.S. Patent No. 3,773,809 describes a process for the recovery of Ni complexes of organic phosphites from a product fluid containing organic nitriles produced by hydrocyanating an ethylenically unsaturated organic mononitrile such as 3-pentenenitrile through extraction of the product fluid with a paraffin or cycloparaffin hydrocarbon solvent. Similarly, U.S. Patent No. 6,936,171 to Jackson and McKinney discloses a process for recovering diphosphite-containing compounds from streams containing dinitriles.

U.S. Patent No. 4,339,395 describes the formation of an interfacial rag layer during extended periods of continuous extraction of certain phosphite ligands. The '395 patent notes that the interfacial rag hinders, if not halts, the phase separation. Because the process is operated continuously, the rag must be removed continuously from the interface as it accumulates to avoid interrupting operation. To solve this problem for the disclosed components, the '395 patent discloses the addition of minor amounts of substantially water-free ammonia.

U.S. Patent No. 7,935,229 describes a process for extractively removing heterogeneously dissolved catalyst from a reaction effluent of a hydrocycanation of unsaturated mononitriles to dinitriles with a hydrocarbon. The catalyst comprises a ligand which may be a monophosphite, a diphosphite, a monophosphonite or a diphosphonite. Ammonia or an amine may be added to a mixture of liquid phases before phase separation takes place.

U.S. Application Serial No. 61/578,495, filed December 21, 2011, describes a process corresponding to that described in the present application, except that a diphosphite ligand is recovered in the process of U.S. Application Serial No. 61/578,495, filed December 21, 2011, whereas a diphosphonite ligand is recovered in the process of the present application. GB 1 416 390 A discloses a liquid/liquid extraction apparatus with superposed stages, controlled recycling of separated light or heavy phase to mixer P in each stage is possible because of valved conduit RLK, RSK leading toward the mixer P for separated light and heavy phase conduits RL and RS respectively.

### SUMMARY OF THE INVENTION

This process recovers diphosphonite-containing compounds from a mixture comprising diphosphonite-containing compounds, organic mononitriles and organic dinitriles.

The present invention is described in the claims, and provides a process for recovering diphosphonite-containing compounds from a feed mixture comprising diphosphonite-containing compounds, organic mononitriles and organic dinitriles in a multistage countercurrent liquid-liquid extractor with extraction solvent comprising aliphatic hydrocarbon, cycloaliphatic hydrocarbon or a mixture of aliphatic and cycloaliphatic hydrocarbon, comprising:
a) flowing the feed mixture to the first stage of the multistage countercurrent liquid-liquid extractor; and
b) contacting the feed mixture with extraction solvent in the multistage countercurrent liquid-liquid extractor;
wherein the first stage of the multistage countercurrent liquid-liquid extractor comprises a mixing section and a settling section, wherein the mixing section provides a mixed phase comprising a light phase and a heavy phase, wherein a light phase separates from a heavy phase in the settling section, wherein a mixed phase comprising a heavy phase, light phase is present in the settling section between the light phase and the heavy phase, wherein the light phase comprises extraction solvent and extracted diphosphonite-containing compounds, wherein the heavy phase comprises organic mononitriles and organic dinitriles, wherein at least aportion of the light phase is withdrawn from the settling section and treated to recover diphosphonite-containing compounds extracted into the light phase, wherein a first portion of the heavy phase is passed to the second stage of the multistage countercurrent liquid-liquid extractor, and wherein a second portion of the heavy phase is withdrawn from the settling section of the first stage of the multistage countercurrent liquid-liquid extractor and recycled to the settling section of the first stage of the multistage countercurrent liquid-liquid extractor,
wherein the first stage of the multistage countercurrent liquid-liquid extractor takes place in an mixer-settler, wherein the mixer-settler comprises a settling section which is separate from the mixing section, and wherein recycled heavy phase is recycled upstream from the point of withdraw of the recycled heavy phase, wherein the recycled heavy phase is recycled to the settling section in the absence of passing through another liquid-liquid extraction stage.

The mixing sections of the stages of the multistage counter current liquid-liquid extractor form an intimate mixture of unseparated light and heavy phase. This intimate mixture comprises an emulsion phase. The emulsion phase may or may not comprise particulate solid material. This emulsion phase separates into a light phase and a heavy phase in the settling sections of the stages, including the first stage. Accordingly, the settling sections of the stages will contain at least some emulsion phase located between the upper light phase and the lower heavy phase. This emulsion phase tends to reduce in size over time. However, in some instances settling takes longer than desired or the emulsion phase never fully separates into a light phase and a heavy phase. This separation problem may be particularly troublesome in the first stage of a multistage countercurrent liquid-liquid extractor.

Recycle of heavy phase in the separation section of the first stage has been found to result in enhanced settling of the emulsion phase. For example, this recycle may result in the reduction of the size of the emulsion phase in the settling section, wherein the size of the emulsion phase is based upon the size of the emulsion phase in the absence of recycle of the heavy phase. Enhanced settling in the settling section may also be measured as an increased rate of settling, based upon the rate of settling in the absence of recycle of the heavy phase.

Another problem, which may be solved by recycle of heavy phase, is formation of rag and build-up of a rag layer the settling section. Rag formation is discussed in U.S. Patent No. 4,339,395 and U.S. Patent No. 7,935,229. Rag comprises particulate solid material, and may be considered to be a form of an emulsion phase, which is particularly stable in the sense that it does not dissipate in a practical amount of time for conducting an extraction process. Rag may form in the mixing section or the settling section of an extraction stage, particularly the first stage of a multistage countercurrent liquid-liquid extractor. In the settling section, the rag forms a layer between the heavy phase and the light phase. The formation of a rag layer in the settling section inhibits proper settling of the heavy phase and the light phase. The formation of a rag layer may also inhibit the extraction of diphosphonite-containing compounds from the heavy phase into the light phase. In a worst case scenario, rag can build up to the extent of completely filling a separation section, necessitating shut down of the extraction process to clean out the settling section. It has been found that recycle of heavy phase in the settling section may reduce or eliminate the size of a rag layer or reduce its rate of formation, based upon the size and rate of formation of the rag layer in the absence of recycle of the heavy phase.

Accordingly, recycle of heavy phase in the settling section of the first stage of a multistage countercurrent extractor may achieve at least one of the following results: (a) a reduction in the size of an emulsion phase in the settling section, based upon the size of the emulsion phase in the absence of recycle of the heavy phase; (b) an increase in the rate of settling in the settling section, based upon the rate of settling in the absence of recycle of the heavy phase; (c) an increase in the amount of diphosphonite-containing compounds in the light phase, based upon the upon the amount of diphosphonite-containing compounds in the light phase in the absence of recycle of the heavy phase; (d) a partial or total reduction in the size of a rag layer in the settling section, based upon the size of a rag layer in the settling section in the absence of recycle of the heavy phase; and (e) reduction in the rate of formation of a rag layer in the settling section, based upon the rate of formation of a rag layer in the settling section in the absence of recycle of the heavy phase.

The second portion of the heavy phase, which is recycled in the first stage, may be recycled to the settling section in the absence of an intervening step to remove diphosphonite-containing compounds from the heavy phase.

According to the invention, the second portion of the heavy phase, which is recycled in the first stage, is recycled to the settling section in the absence of passing through another liquid-liquid extraction stage.

The extraction solvent feed from the second stage of the multistage countercurrent liquid-liquid extractor to the first stage of the multistage countercurrent liquid-liquid extractor may comprise at least 1000 ppm, for example, from 2000 to 5000 ppm, of diphosphonite-containing compounds. The extraction solvent feed from the second stage may comprise at least 10 ppm, for example, from 20 to 200 ppm, of nickel.

A raffinate recycle ratio (RRR) may be between 0.1 and 0.9, for example, between 0.2 and 0.8, wherein RRR is defined by the ratio of X to Y, wherein X is the mass per unit time of the second portion of the heavy phase recycled to the settling section of the first stage of the multistage countercurrent liquid-liquid extractor, and wherein Y is the mass per unit time of all of the heavy phase withdrawn from the settling section of the first stage of the multistage countercurrent liquid-liquid extractor.

The diphosphonite-containing compound may be a diphosphonite ligand of formula I:

(R¹)(R²-O)P-O-Y-O-P(O-R³)(R⁴) I

where R¹ and R² are each independently identical or different, separate or bridged organic radicals; R³ and R⁴ are each independently identical or different, separate or bridged organic radicals; and Y is a bridging group.

Examples of phosphonite-containing compounds of formula (I) may be diphosphonite ligands of formula (II) or (formula III): 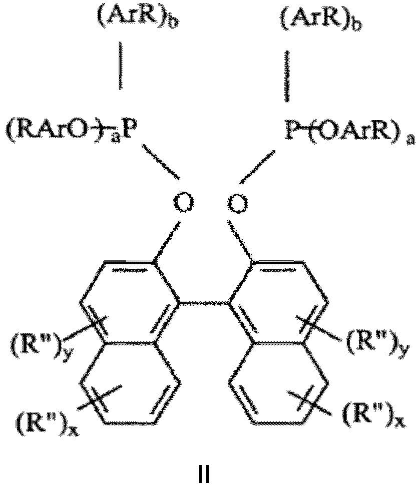 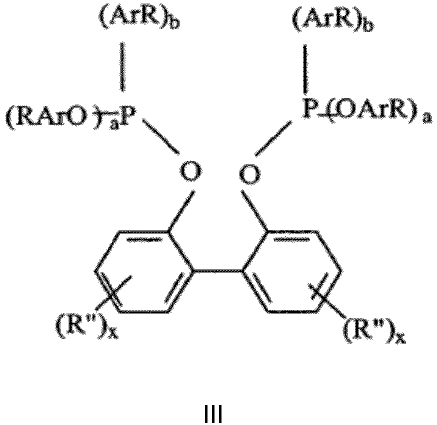 wherein:
x=0 to 4;
y=0 to 2;
a is 1 and b is 1;
each Ar is individually phenyl or naphthyl, and the two Ar groups that are directly or indirectly (through an oxygen) bonded to the same phosphorus atom may be linked to each other by a linking unit selected from the group consisting of direct bond, alkylidene, secondary or tertiary amine, oxygen, sulfide, sulfone, and sulfoxide;
each R is individually hydrogen, ethenyl, propenyl, acryloyl, methacryloyl, an organic radical with a terminal ethenyl, propenyl, acryloyl, or methacryloyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each Ar can be further substituted with linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each R" is individually hydrogen, ethenyl, propenyl, an organic radical with a terminal ethenyl or propenyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether.

Examples of diphosphonite ligands of formula (III) include compounds where at least one R represents ethenyl, propenyl, acryloyl, methacryloyl or the organic radical with a terminal ethenyl, propenyl, acryloyl, or methacryloyl group or at least one R" represents ethenyl, propenyl, or the organic radical with a terminal ethenyl or propenyl group.

An example of a diphosphonite ligand of formula (III) is a compound of formula (IV):

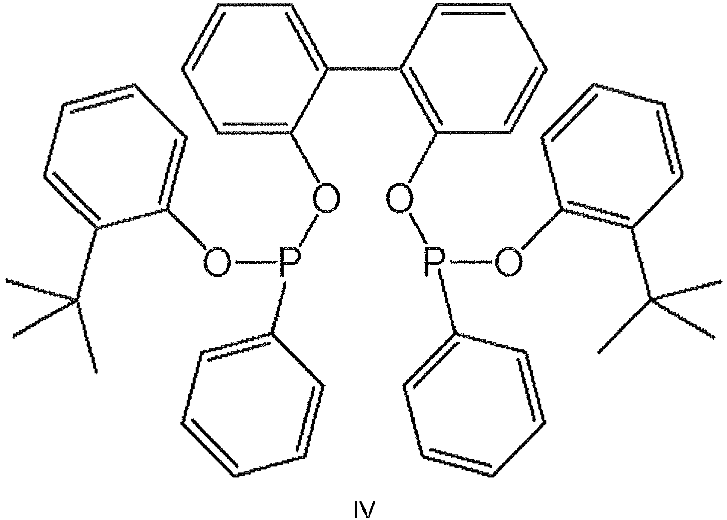

Diphosphonite ligands and the synthesis of these diphosphonite ligands are described in U.S. Patent No. 6,924,345 and in U.S. Patent No. 7,935,229.

At least one stage of the extraction may be carried out above 40°C.

At least one stage of extraction may contain a Lewis base.

If at least one stage of extraction contains a Lewis base, the Lewis base may be a monodentate triarylphosphite or a monodentate triarylphosphine, wherein the aryl groups are unsubstituted or substituted with alkyl groups having 1 to 12 carbon atoms, and wherein the aryl groups may be interconnected.

The Lewis base may optionally be selected from the group consisting of:
a) anhydrous ammonia, pyridine, alkylamine, dialkylamine, trialkylamine wherein the alkyl groups have 1 to 12 carbon atoms; and
b) polyamine.

If the Lewis base is a polyamine, the polyamine may comprise at least one selected from hexamethylene diamine, and dimers and trimers of hexamethylene diamine, for example, bis-hexamethylene triamine.

The Lewis base may optionally comprise a basic ion exchange resin, for example, Amberlyst 21^{®} resin.

One example of a suitable cyclic alkane extraction solvent is cyclohexane.

The feed mixture may be an effluent stream from a hydrocyanation process, for example, a process for hydrocyanating 3-pentenenitrile, a process for the single hydrocyanation of 1,3-butadiene to pentenenitriles or a process for the double hydrocyanation of 1,3-butadiene to adiponitrile.

### BRIEF DESCRIPTION OF THE DRAWINGS

Figure 1 is a diagram showing the flow of fluids through a multistage countercurrent liquid-liquid extractor.
Figure 2, which is not covered by the claims, is a diagram showing recycle of light phase in a mixing section of a stage of a multistage countercurrent liquid-liquid extractor.
Figure 3, which is not covered by the claims, is a diagram showing recycle of heavy phase in an extraction column.
Figure 4 is a diagram showing recycle of heavy phase in a settling section of a mixing/settling apparatus having three chambers in the settling section.
Figure 5 is a graph showing the rag level in a settler during catalyst extraction in continuous operation.

### DETAILED DESCRIPTION OF THE INVENTION

The processes of the present invention involve methods for recovering diphosphonite-containing compounds from a mixture comprising diphosphonite-containing compounds and organic dinitriles, using liquid-liquid extraction.

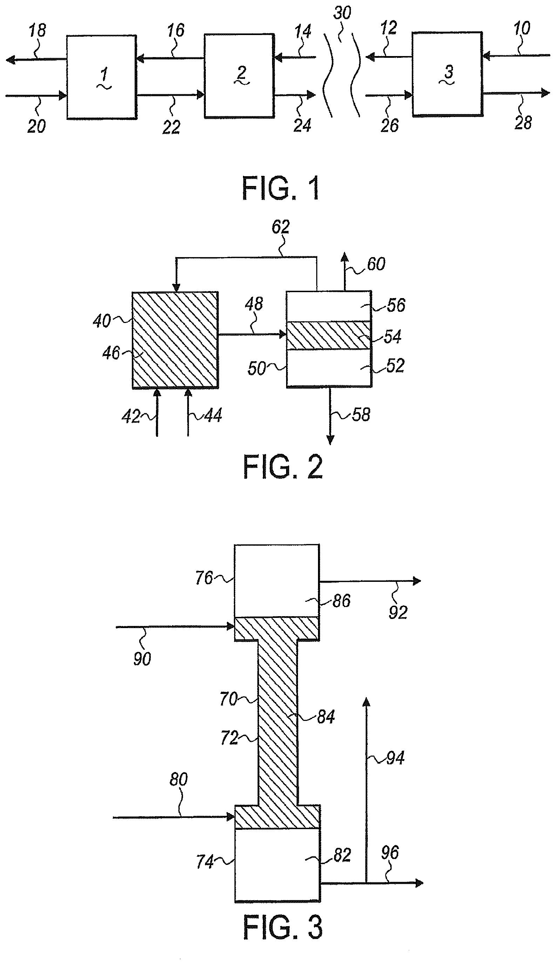

Figure 1 is a diagram of a multistage countercurrent liquid-liquid extractor. Lines in Figure 1 represent flow of materials, rather than any particular type of equipment, such as pipes. Similarly, squares in this diagram represent stages or sections for mixing and settling, rather than any particular type of equipment.

Three stages are depicted in Figure 1. The first stage is depicted by mixing and settling section **1.** The second stage is depicted by mixing and settling section **2.** The final stage is depicted by mixing and settling section **3.** Gap **30** represents a space where additional stages may be inserted. For example, one or more, for example, from one to four, mixing and settling sections may be inserted in gap **30** between mixing and settling section **2** and mixing and settling section **3.**

In Figure 1, a fresh extraction solvent feed, for example, cyclohexane, is introduced into the multistage countercurrent extractor via line **10.** The extraction solvent or light phase exiting from mixing settling section **3** passes through line **12** to the next stage of the multistage extractor. In a multistage countercurrent liquid-liquid extractor having three stages, extraction solvent in line **12** would pass directly into stage **2** via line **14.** Extraction solvent from stage **2** passes through line **16** to stage **1.** The extraction solvent comprising extracted diphosphonite-containing compounds passes out of the stage **1** mixing and settling section through line **18.**

A feed comprising diphosphonite-containing compounds is fed into the stage **1** mixer and settler via line **20.** The feed further comprises a mixture comprising organic mononitriles and dinitriles, which is immiscible with the extraction solvent. In stage **1,** a portion of the diphosphonite-containing compounds is extracted into the extraction solvent which exits stage **1** via line **18.** The immiscible dinitrile and mononitrile mixture or the heavy phase is removed from the stage **1** mixing and settling section by line **22** and is passed into the stage **2** mixing and settling section. A portion of the diphosphonite-containing compounds is extracted into the light phase in the stage **2** mixing and settling section. The heavy phase exits the stage **2** mixing and settling section by line **24.** Similarly, if there are additional stages in gap **30** shown in Figure 1, extraction of diphosphonite-containing compounds will take place in such intermediate stages in a similar manner to that taking place in stage **2.**

After the heavy phase passes through the first stage and any intermediate stages, it passes through the final stage mixing and settling section **3.** In particular, the heavy phase is introduced into mixing and setting section **3** through line **26.** After passing through the final stage mixing and settling section **3,** the heavy phase exits via line **28.**

A two-stage multistage countercurrent liquid-liquid extractor is represented in Figure 1 by mixing and settling sections **1** and **2;** lines **14, 16** and **18** showing the direction of extraction solvent flow; and lines **20, 22** and **24** showing the direction of heavy phase flow. In a two-stage multistage counter current liquid-liquid extractor, mixing and settling section **3;** lines **10, 12, 26** and **28;** and gap **30** are omitted. In the two stage countercurrent liquid-liquid extractor, extraction solvent comprising extracted diphosphonite-containing compounds passes from the extractor through line **18,** and extracted heavy phase, i.e. raffinate, passes from the extractor through line **24.**

Thus, it can be seen that the multistage countercurrent liquid-liquid extractor comprises two or more stages with countercurrent flow of extraction solvent and heavy phase.

Figure 2 is a diagrammatic representation of one type of a mixing and settling section, also referred to herein as a mixer-settler, which is not covered by the claims. This type of mixer-settler may be used in any of the stages shown in Figure 1. This mixer-settler comprises a mixing section **40** and a settling section **50.** The mixing section **40** and the settling section **50** are separate. All of the effluent from the mixing section **40** flows into the settling section **50.** Fluid from the mixing section **40** flows through the settling section **50** in a horizontal manner, although there is also no restriction of movement of fluids vertically throughout the settling section **50.**

An extraction solvent is introduced into the mixing section **40** by line **42.** A feed comprising diphosphonite-containing compounds is introduced into the mixing section **40** by line **44.** Alternatively, the contents of lines **42** and **44** may be combined upstream of the mixing section **40** and introduced into mixing section **40** through a single inlet. These two feeds are mixed in the mixing section **40** to provide a mixed phase comprising an emulsion phase represented in Figure 2 by shaded area **46.**

Line **48** represents the flow of mixed phase **46** from the mixing section **40** into the settling section **50.** As depicted in Figure 2, there are three phases in the settling section **50,** including a heavy phase **52,** a mixed phase **54,** and a light phase **56.** The heavy phase **52** is depleted in diphosphonite-containing compounds, insofar as it has a lower concentration of diphosphonite-containing compounds as compared with the concentration of diphosphonite-containing compounds in feed **44,** due to the extraction of diphosphonite-containing compounds into the light phase **56.** Correspondingly, the light phase **56** is enriched in diphosphonite-containing compounds, insofar as it has a higher concentration of diphosphonite-containing compounds as compared with the concentration of diphosphonite-containing compounds in extraction solvent feed **42,** due to the extraction of diphosphonite-containing compounds into the light phase **56.** Heavy phase **52** exits the settling section **50** via line **58.** At least a portion of the light phase **56** is removed from the settling section **50** via line **60,** and another portion of the light phase **56** may, optionally, be removed from the settling section **50** and recycled to mixing section **40** or settling section **50** through lines not shown in Figure 2.

Although not shown in Figure 2, which is diagrammatically shows the flow of fluids, it will be understood that each of the mixing section **40** and the settling section **50** may comprise one or more stages, subsections, compartments or chambers. For example, settling section **50** may include more than one chamber between the point of introduction of the mixed phase **46** through line **48** and the point of withdrawal of light phase and heavy phase through lines **58, 60** and **62.** Horizontal extension between the point of introduction of the mixed phase **46** through line **48** and the point of withdrawal of light and heavy phases through lines **58, 60** and **62** promotes settling of the light and heavy phases **56** and **52.** The size of the mixed phase **54** may become progressively smaller as fluids settle and flow through the chamber. For example, the final chamber from where fluids are removed may include little or no mixed phase **54.** It will further be understood that mixing section **40** may include one or more types of mixing apparatus, such as an impeller, not shown in Figure 2.

Figure 3 provides a representation of another type of apparatus, which is not covered by the claims, for use as a mixing and settling section. The type of apparatus **70** shown in Figure 3 is referred to herein as an extraction column. This extraction column **70** includes a mixing section **72,** a heavy phase collection section **74** and a light phase collection section **76.** The entire column **70** may be considered to be a settling section with a mixing section between collection section **74** and collection section **76.** In extraction column **70** the mixing section **72** is part of the settling section. An extraction solvent is introduced into column **70** through line **80.** A heavier phase comprising a diphosphonite-containing compound is introduced into column **70** through line **90.** As the light phase passes upward through the column, and the heavy phase passes downward through the column, a mixture of the two phases is formed in mixing section **72.** This mixture is represented in Figure 3 as shaded mixed phase **84.** This mixed phase **84** may comprise an emulsion phase. The point of introduction of heavy phase through line **90** should be sufficiently above the point of introduction of the light phase to allow for sufficient mixing of the two phases in the mixing section resulting in the extraction of diphosphonite-containing compounds into the light phase. The intimate mixing of light and heavy phase in mixing section **72** may be promoted by mechanical or static mixing apparatus not shown in Figure 3. For example, mixing section **72** may comprise baffles or perforated plates, not shown in Figure 3.

The heavy phase **82** settles into collection section **74** and passes out of the column **70** through line **96.** Light phase **86** settles in collection section **76** and passes from the column through line **92.** Heavy phase **82** settles into collection section **74** and exits column **70** through line **96.** A portion of this heavy phase is taken as a side stream through line **94** and is passed into the mixing section **72** as recycle into column **70.** Alternatively, line **94** may be taken directly from collection section **74,** instead of as a side stream from line **96.** In another alternate embodiment, line **94** may flow directly into line **80** or into column **72** at a point near the interface of the mixed phase **84** and the heavy phase **82.**

Recycle of heavy phase into the settling section of extraction column **70** increases the downward flow of heavy phase in the settling section. Without being bound by any theory, it is theorized that this increased downward flow may tend to breakup an emulsion phase, which may tend to otherwise form in the settling section. This emulsion phase, when present, may form at the interface of the mixed phase **84** and the heavy phase **82.** Accordingly, the point of introduction of the recycled heavy phase, for example, through line **94** as shown in Figure 3 should be sufficiently above to point where an emulsion phase would form to allow for heavy phase to flow downward through this point.

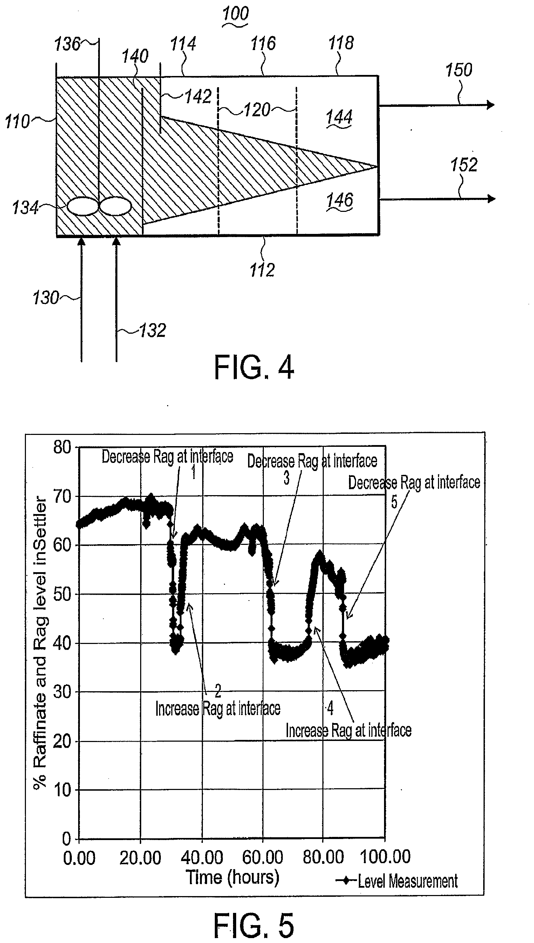

Figure 4 provides a representation of a mixer-settler **100** having a multistage settling section. Mixer-settler **100** has a mixing section **110** and a settling section **112.** In mixer-settler **100,** the mixing section **110** is separate from the settling section **112.** The settling section has three compartments, represented in Figure 4 as sections **114, 116,** and **118.** These sections are separated by coalescence plates **120.** The coalescence plates **120** may be designed to provide flow of separated light and heavy phases between chambers, while restricting the flow of emulsion phase between chambers. A feed comprising a diphosphonite-containing compound is passed into the mixing section **110** via line **130.** The extraction solvent is introduced into mixing section **110** via line **132.** The mixing section **110** includes an impeller **134** mounted on shaft **136** to provide for mechanical mixing of fluids. Mixing of the feeds provides a mixed phase comprising an emulsion phase represented in Figure 4 by shading **140.**

The mixed phase **140** flows into the settling section **112** as an overflow from the mixing section **110.** This mixed phase **140** is prevented from flowing directly into the light phase **144** by baffle plate **142.** As settling occurs in settling section **112,** the mixed phase **140** decreases in volume, the volume of the light phase **144** increases, and the volume of the heavy phase **146** increases. Heavy phase **146** is removed from settling section **112,** in particular from chamber **118**, via line **152** and light phase **144** is removed from settling section **112,** in particular, from chamber **118,** via line **150.** A portion of the heavy phase removed through line **152** is taken as a side stream through a line not shown in Figure 4 and is introduced back into the settling section **112** at an appropriate point in section **114.** The vertical point of introduction of line **154** into section **114** may be, for example, at or near the interface of the mixed phase **140** and the heavy phase **146.**

Recycle of heavy phase **146** into the settling section increases the horizontal flow of heavy phase **146** relative to the horizontal flow of mixed phase **140** and light phase **144** through the settling section **112.** Without being bound by any theory, it is theorized that by increasing flow of heavy phase **146** at the interface of the heavy phase **146** and the mixed phase **140** relative to the flow of the mixed phase **140** and the heavy phase **146,** in general, the tendency of an emulsion phase to stabilize may be reduced. In particular, it is theorized that the increased horizontal flow of heavy phase **146** may result in mild agitation or shear at the interface of the heavy phase **146** and the mixed phase **140,** where a stable emulsion phase might otherwise tend to form. It is also theorized that downward flow of heavy phase through an emulsion phase or rag layer may tend to force the emulsion phase or rag layer downward towards or into the heavy phase, thereby tending to break up the emulsion phase or rag layer.

It is desired to maximize the horizontal displacement of the of the point of withdraw and the point of reentry of the recycle stream. For example, in a multichamber settling section, heavy phase **146** may be removed from the chamber, e.g., chamber **118,** furthest removed from the point of introduction of the mixed phase **146** from the mixing section **110** into the settling section **112,** and the recycled heavy phase **146** may be reintroduced into the settling section **112** at a point near the introduction of the mixed phase **146** from the mixing section **110** into the settling section **112.** For example, one point where the recycled heavy phase **146** may be introduced into the settling section **112** is at a point upstream of baffle plate **142,** where mixed phase **140** overflows from the mixing section **110** into the settling section **112.**

It is desirable for both a mononitrile and a dinitrile to be present in the countercurrent contactor. For a discussion of the role of monodentate and bidentate ligand in extraction of hydrocyanation reactor effluent streams, see U.S. Patent No. 3,773,809 to Walter and U.S. Patent 6,936,171 to Jackson and McKinney.

For the process disclosed herein, suitable ratios of mononitrile to dinitrile components include 0.01 to 2.5, for example, 0.01 to 1.5, for example 0.65 to 1.5.

Maximum temperature is limited by the volatility of the hydrocarbon solvent utilized, but recovery generally improves as the temperature is increased. Examples of suitable operating ranges are 40°C to 100°C and 50°C to 80°C.

The controlled addition of monophosphonite ligands may enhance settling. Examples of monophosphite ligands that may be useful as additives include those disclosed in Drinkard et al U.S. Patent 3,496,215, U.S. Patent 3,496,217, U.S. Patent 3,496,218, U.S. Patent 5,543,536, and published PCT Application WO 01/36429 (BASF).

The addition of Lewis base compounds to a mixture comprising diphosphonite-containing compounds, organic mononitriles and organic dinitriles may enhance settling, especially when the mixture comprises a Lewis acid, such as ZnCl₂. The addition may take place either before or during an extraction process in a multistage countercurrent extractor. Examples of suitable weak Lewis base compounds include water and alcohols. Suitable stronger Lewis base compounds include hexamethylene diamine, dimers and trimers of hexamethylene diamine, ammonia, aryl- or alkyl amines, such as pyridine or triethylamine, or basic resins such as Amberlyst 21^{®}, a commercially available basic resin made by Rohm and Haas. The addition of Lewis base may reduce or eliminate any inhibiting effect of Lewis acid on catalyst recovery.

The diphosphonite-containing compounds extracted by the processes described herein are also referred to herein as bidentate phosphorus-containing ligands. These extracted ligands comprise free ligands (e.g., those which are not complexed to a metal, such as nickel) and those which are complexed to a metal, such as nickel. Accordingly, it will be understood that extraction processes described herein are useful for recovering diphosphonite-containing compounds which are metal/ligand complexes, such as a complex of zero valent nickel with at least one ligand comprising a bidentate-phosphorus containing ligand.

### Diphosphonite Ligands

The diphosphonite-containing compound may be a diphosphonite ligand of formula (I):

(R¹)(R²-O)P-O-Y-O-P(O-R³)(R⁴) I

where R¹ and R² are each independently identical or different, separate or bridged organic radicals; R³ and R⁴ are each independently identical or different, separate or bridged organic radicals; and Y is a bridging group.

The R¹ and R² radicals may each independently be identical or different organic radicals. Examples of R¹ and R² radicals are aryl radicals, preferably those having from 6 to 10 carbon atoms, which may be unsubstituted or mono- or polysubstituted, in particular by C₁-C₄-alkyl, halogen, such as fluorine, chlorine, bromine, halogenated alkyl, such as trifluoromethyl, aryl, such as phenyl, or unsubstituted aryl groups.

The R³ and R⁴ radicals may each independently be identical or different organic radicals. Examples of R³ and R⁴ radicals are aryl radicals, preferably those having from 6 to 10 carbon atoms, which may be unsubstituted or mono- or polysubstituted, in particular by C₁-C₄-alkyl, halogen, such as fluorine, chlorine, bromine, halogenated alkyl, such as trifluoromethyl, aryl, such as phenyl, or unsubstituted aryl groups.

The R¹ and R² radicals may each be separate or bridged. The R³ and R⁴ radicals may also each be separate or bridged. The R¹, R², R³ and R⁴ radicals may each be separate, two may be bridged and two separate, or all four may be bridged.

Examples of phosphonite-containing compounds of formula (I) may be diphosphonite ligands of formula (II) or (formula III): 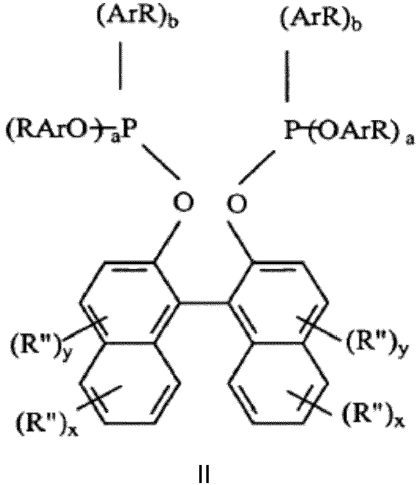 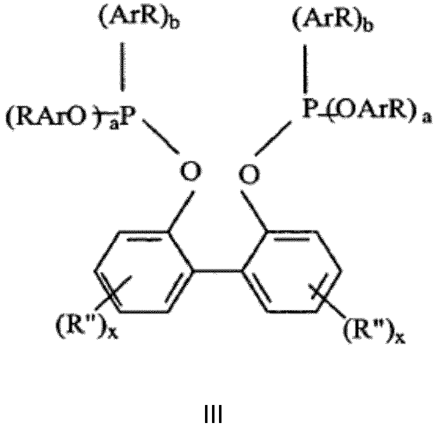 wherein:
x=0 to 4;
y=0 to 2;
a is 1 and b is 1;
each Ar is individually phenyl or naphthyl, and the two Ar groups that are directly or indirectly (through an oxygen) bonded to the same phosphorus atom may be linked to each other by a linking unit selected from the group consisting of direct bond, alkylidene, secondary or tertiary amine, oxygen, sulfide, sulfone, and sulfoxide;
each R is individually hydrogen, ethenyl, propenyl, acryloyl, methacryloyl, an organic radical with a terminal ethenyl, propenyl, acryloyl, or methacryloyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each Ar can be further substituted with linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each R" is individually hydrogen, ethenyl, propenyl, an organic radical with a terminal ethenyl or propenyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether.

At least one R in formula (II) or formula (III) may represent ethenyl, propenyl, acryloyl, methacryloyl or the organic radical with a terminal ethenyl, propenyl, acryloyl, or methacryloyl group and/or at least one R" may represent ethenyl, propenyl, or the organic radical with a terminal ethenyl or propenyl group.

An example of a diphosphonite ligand of formula (III) is a compound of formula (IV):

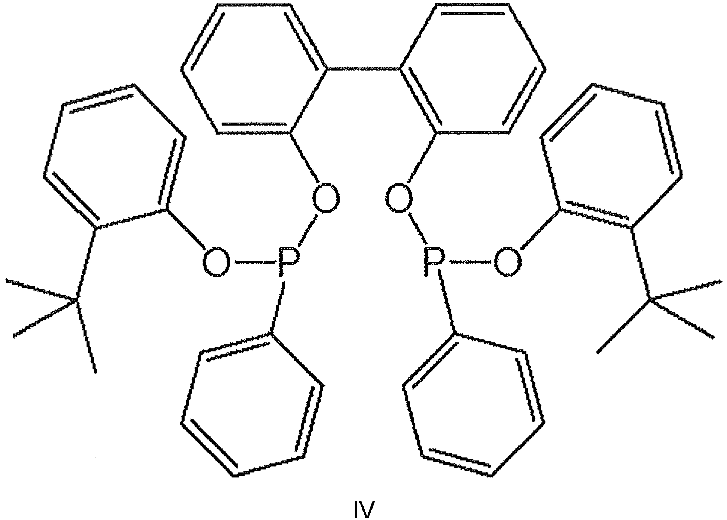

Diphosphonite ligands and the synthesis of these diphosphonite ligands are described in U.S. Patent No. 6,924,345 and in U.S. Patent No. 7,935,229.

### Extraction Solvent

Suitable hydrocarbon extraction solvents include paraffins and cycloparaffins (aliphatic and alicyclic hydrocarbons) having a boiling point in the range of about 30 °C to about 135 °C, including n-pentane, n-hexane, n-heptane and n-octane, as well as the corresponding branched chain paraffinic hydrocarbons having a boiling point within the range specified. Useful alicyclic hydrocarbons include cyclopentane, cyclohexane and cycloheptane, as well as alkyl substituted alicyclic hydrocarbons having a boiling point within the specified range. Mixtures of hydrocarbons may also be used, such as, for example, mixtures of the hydrocarbons noted above or commercial heptane which contains a number of hydrocarbons in addition to n-heptane. Cyclohexane is the preferred extraction solvent.

The lighter (hydrocarbon) phase recovered from the multistage countercurrent liquid-liquid extractor is directed to suitable equipment to recover catalyst, reactants, etc. for recycle to the hydrocyanation, while the heavier (lower) phase containing dinitriles recovered from the multistage countercurrent liquid-liquid extractor is directed to product recovery after removal of any solids, which may accumulate in the heavier phase. These solids may contain valuable components which may also be recovered, e.g., by the process set forth in U.S. Patent No. 4,082,811.

### EXAMPLES

In the following examples, values for extraction coefficient are the ratio of weight fraction of catalyst in the extract phase (hydrocarbon phase) versus the weight fraction of catalyst in the raffinate phase (organonitrile phase). An increase in extraction coefficient results in greater efficiency in recovering catalyst. As used herein, the terms, light phase, extract phase and hydrocarbon phase, are synonymous. Also, as used herein, the terms, heavy phase, organonitrile phase and raffinate phase, are synonymous.

Analyses of the extract and the raffinate streams of the catalyst extraction were conducted on an Agilent 1100 series HPLC and via ICP. The HPLC was used to determine the extraction efficiency of the process.

In the Examples which follow, a diphosphite ligand is present. However, it is believed that the results of these Examples would be essentially the same if a diphosphonite ligand were substituted for the diphosphite ligand.

### Example 1

To a 50 mL, jacketed, glass laboratory extractor, equipped with a magnetic stirbar, digital stir-plate, and maintained at 65 °C, was charged 10 grams of the product of a pentenenitrile-hydrocyanation reaction, and 10 grams of the extract from the second stage of a mixer-settler cascade, operated in counter-current flow. The extract from the second stage contained approximately 50 ppm nickel and 3100 ppm diphosphite ligand.

The reactor product was approximately:
85% by weight C₆ dinitriles
14% by weight C₅ mononitriles
1% by weight catalyst components
360 ppm by weight active nickel.

The laboratory reactor was then mixed at 1160 rotations-per-minute, for 20 minutes, and then allowed to settle for 15 minutes. After settling for 15 minutes, a stable emulsion was present throughout the extract phase. Samples were obtained of the extract and raffinate phases of the extractor and analyzed to determine the extent of catalyst extraction. The ratio of active nickel present in the extract phase vs. the raffinate phase was found to be 14.

### Example 2

Using the same hydrocyanation reactor product and 2^{nd} stage settler extract as Example 1, a 50 mL, jacketed, glass laboratory extractor, equipped with a magnetic stirbar, digital stir-plate, and maintained at 65 °C, was charged 10 grams of the product of a pentene-hydrocyanation reaction, and 10 grams of the extract from the second stage of a mixer-settler cascade, operated in counter-current flow.

The laboratory reactor was then mixed at 1160 rotations-per-minute, for 20 minutes, and then allowed to settle for 15 minutes. After settling for 15 minutes, a stable emulsion was present throughout the extract phase. Then, gentle mixing was applied, approximately 100 rpm, which caused the emulsion to disentrain. Samples were obtained of the extract and raffinate phases of the extractor and analyzed to determine the extent of catalyst extraction. The ratio of active nickel present in the extract phase vs. the raffinate phase was found to be 16.

Examples 1 and 2 illustrate the beneficial effect of applying gentle agitation to the heavy phase of the settling section of the first stage of a multistage countercurrent liquid-liquid extractor, and provide a practical simulation of the effect of recycle of the heavy phase in continuous operation.

**Table 1:**

| **Catalyst and ligand extraction coefficient for various first stage extraction coefficient recycle ratios.** | | | |
|---|---|---|---|
| Example | RRR | Catalyst Recovery (KLL) | Stable Emulsion |
| 1 | 0 | 14 | Yes |
| 2 | 1 | 16 | No |

| | | | |
|---|---|---|---|
| KLL = amount of catalyst in the extract / amount of catalyst in the raffinate | | | |

### Example 3 (comparative example)

A three stage countercurrent liquid-liquid extractor, in continuous operation, utilizing the same two feed streams described in Example 1 was operated for a duration of 20 days. Samples were obtained of the extract and raffinate phases of the settling section of the extractor and analyzed to determine the extent of catalyst extraction. The ratio of active nickel present in the extract phase vs. the raffinate phase was found to be 5.6 ± 2. A stable emulsion and rag was present throughout the extract portion of the settling section of the first stage of the extractor. The emulsion and rag was also present to a lesser extent in the settling sections of the second and third stages of the extractor.

### Example 4 (comparative example)

Example 3 was replicated except that the light-phase was recycled from the settling section back to the mixing section of the first stage of the countercurrent liquid-liquid extractor for a duration of 14 days. The benefits of this type of recycle of a light phase are described in an application identified as U.S. Application Serial No. 61/578,508, filed December 21, 2011. This Example 4 provides a base case for demonstrating improved results as described in Example 5 below.

The ratio of active nickel present in the extract phase vs. the raffinate phase was found to be 8.6 ± 2. Less stable emulsion and rag was present throughout the extract portion of the settling section of the first stage of the extractor than in Example 3.

### Example 5

Example 3 was replicated except that both light-phase and heavy-phase were recycled in the first stage of the countercurrent liquid-liquid extractor for a duration of 60 days. Recycle of the light phase took place from the settler to the mixer in the manner described in Example 4. Recycle of the heavy phase took place from the settler and back to the settler in a manner which provided mild agitation to the mixed phase in the settler. The ratio of active nickel present in the extract phase vs. the raffinate phase was found to be 10.8 ± 2. Less stable emulsion and rag was present throughout the extract portion of the settling section of the extractor than in Example 4.

Results of Examples 3-5 are summarized in Table 2.

**Table 2:**

| **Catalyst extraction coefficients for continuous operation using phase recycles.** | | | | |
|---|---|---|---|---|
| Example | Duration (days) | Phase recycle | KLL | Stable emulsion |
| 3 | 20 | None | 5.6 ± 2 | Yes |
| 4 | 14 | Light | 8.6 ± 2 | No |
| 5 | 60 | Liqht and Heavy | 10.8 ± 2 | No |

Examples 3-5 illustrate the beneficial effect of recycling the light phase from the settler back to the mixer, and the heavy phase from the settler and back to the settler, of the settling section of the first stage of a multistage countercurrent liquid-liquid extractor while in continuous operation.

### Example 6

Using the same countercurrent liquid-liquid extractor, in continuous operation as in Examples 3-5, the combined level of the raffinate and rag layers in the settling section of the extractor were measured by means of an RF probe (Universal III^{™} smart level). The data from the probe is shown in Figure 5. A rapid change of >2% in less than 2 hour indicates that the rag layer was pushed into the raffinate layer, or the rag re-formed at the interface. When the raffinate recycle in the first stage, from the settler and back to the settler, disturbed the interface, the rag layer was pushed in the raffinate layer and the raffinate and rag layer total % level in the settler of the first stage decreases rapidly as shown in the Figure 5. When the raffinate recycle no longer disturbed the interface, the rag layer again re-formed at the interface which was measured by the % level in the settler for the raffinate and rag increasing rapidly.

As shown in Figure 5, the extraction was operated continuously for approximately 25 hours without raffinate recycle, and the rag level (including the thickness of the rag layer and the thickness of the underlying raffinate layer) was between 60% and 70%. After about 25 hours, recycle of raffinate was started. Figure 5 shows that the rag level rapidly decreased to below 40% with a corresponding increase in the thickness of the extract layer. After about 1 hour, recycle of raffinate was discontinued, and, as shown in Figure 5, the rag level rapidly increased to at least 60%. However, the rag level did not reach the rag level observed before the first recycle of raffinate. After the first recycle of raffinate was discontinued, the operation of the extractiopn was continued until the total elapsed time of the experiment reached about 60 hours. At that time, recycle of raffinate was resumed. Figure 5 again shows that the rag level rapidly decreased to below 40% with a corresponding increase in the thickness of the extract layer. The recycle of raffinate was continued until the total elapsed time of the experiment reached about 77 hours. During this period, the rag level remained substantially constant below 40%. After about 77 hours of total elapsed time, the recycle of raffinate was again discontinued, and, as shown in Figure 5, the rag level again rapidly increased, this time to a level between 50% and 60%. After about 85 hours of total elapsed time, recycle of raffinate was resumed again. Figure 5 again shows that the rag level rapidly decreased to below 40%. This level was essentially maintained as recycle of raffinate continued until the end of the experiment at 100 hours of total elapsed time.

### Examples 7-11

These Examples 7-11 illustrate that effective catalyst recovery occurs for a mononitrile to dinitrile ratio greater than 0.65.

Five different mixtures comprised of a Ni diphosphite complex, with the diphosphite ligand shown in Structure XX (where R¹⁷ is isopropyl, R¹⁸ is H, and R¹⁹ is methyl), ZnCl₂ (equimolar with Ni) and differing in the ratio of mononitrile to dinitrile, were separately liquid-liquid batch extracted with an equal weight of cyane (i.e. cyclohexane). The molar ratio of organic mononitrile to organic dinitrile and the resulting extraction coefficients are shown in the Table 3 below. A compound may be effectively recovered if it has an extraction coefficient of 1 or greater at solvent to feed ratios greater than 1 using a countercurrent multistage extractor.

**Table 3.**

| **Catalyst and ligand extraction coefficients for varying ratios of mononitriles-to-dinitriles** | | | |
|---|---|---|---|
| Example | mononitrile/dinitrile | Catalyst extraction coefficient | Ligand extraction coefficient |
| 7 | 2.33 | 1.28 | 4.09 |
| 8 | 1.85 | 1.33 | 8.08 |
| 9 | 1.19 | 2.02 | 16.97 |
| 10 | 0.91 | 2.63 | 35.99 |
| 11 | 0.57 | 4.82 | 49.59 |

### Example 12

This Example demonstrates the effect of hold-up time on the extractability of the diphosphite ligand catalyst.

A mixture comprised predominantly of organic dinitriles and a Ni diphosphite complex, the structure of the diphosphite ligand being shown in Structure XX (where R¹⁷ is isopropyl, R¹⁸ is H, and R¹⁹ is methyl) and ZnCl₂ (equimolar with Ni) was divided into two portions. Both portions are liquid-liquid extracted in a three-stage contactor at 40°C, with an equal weight of cyclohexane. Both portions were sampled with time and the progress of the catalyst recovery into the extract phase is shown in Table 4 as the percent of the final steady state value achieved at a given time.

**Table 4**

| **Concentration of Diphosphite ligand with time in the extracting solvent phase.** | |
|---|---|
| Time, minutes | % of steady state concentration at 40°C |
| 2 | 12 |
| 4 | 19 |
| 8 | 34 |
| 14 | 52 |
| 30 | 78 |
| 60 | 100 |
| 91 | 100 |

### Example 13

This Example illustrates the effect of temperature on the extractability of catalyst with last-stage extraction solvent recycle.

A mixture comprised predominantly of organic dinitriles and a Ni diphosphite complex, the structure of the diphosphite ligand being shown in Structure XXIV (where R¹⁷ is methyl, R¹⁸ is methyl and R¹⁹ is H) and ZnCl₂ (equimolar with Ni) was divided into three portions. The portions were batch liquid-liquid extracted at 50°C, 65°C and 80°C, respectively, with an equal weight of n-octane and monitored with time. The results are shown in Table 5.

**Table 5**

| Time | % of steady state at 50°C | % of steady state at 65°C | % of steady state at 80°C |
|---|---|---|---|
| 2 | 0.0 | 0.0 | 1.8 |
| 4 | 0.0 | 0.0 | 1.6 |
| 8 | 0.0 | 0.0 | 3.6 |
| 14 | 0.0 | 0.0 | 4.3 |
| 20 | 0.0 | 0.0 | 3.6 |
| 30 | 0.0 | 0.0 | 7.6 |
| 60 | 0.0 | 1.6 | 16.3 |
| 90 | 0.7 | 4.0 | 48.6 |

### Example 14

This Example demonstrates the effect of adding water in three-stage extraction with cyclohexane recycle in the first stage.

Fifteen grams of a mixture comprised predominantly of organic dinitriles and a Ni diphosphite complex, the structure of the diphosphite ligand being shown in Structure XXIV (where R¹⁷ is methyl, R¹⁸ is methyl and R¹⁹ is H) and ZnCl₂ (equimolar with Ni), was extracted in a three-stage continuous extractor at a temperature of 50°C with an equal weight of cyclohexane for one hour resulting in an catalyst extraction coefficient of 4.3.

To this mixture, 100 microliters of water was added. After continuing to heat and agitate for another hour, the diphosphite Ni extraction coefficient was measured as 13.4 - a threefold increase.

### Examples 15 and 16

These Examples demonstrate the effect of adding hexamethylene diamine (HMD) to the extraction zone.

Example 1 was repeated except that hexamethylene diamine was added to the product of a pentene-hydrocyanation reaction. To a 50 mL, jacketed, glass laboratory extractor, equipped with a magnetic stirbar, digital stir-plate, and maintained at 65 °C, was charged 10 grams of the product of pentene-hydrocyanation reactor product, and 10 grams of the extract from the second stage of a mixer-settler cascade, operated in counter-current flow.

The reactor product was approximately:
85% by weight C₆ dinitriles
14% by weight C₅ mononitriles
1% by weight catalyst components
360 ppm by weight active nickel.

The laboratory reactor was then mixed at 1160 rotations-per-minute, for 20 minutes, and then allowed to settle for 15 minutes. A stable emulsion was present throughout the extract phase in the absence of the addition of HMD. After 15 minutes of settling, essentially no emulsion phase was present when HMD was added. Samples were obtained of the extract and raffinate phases of the extractor and analyzed to determine the extent of catalyst extraction.

**Table 6**

| **Effect of hexamethylene diamine on catalyst extraction** | | | |
|---|---|---|---|
| Example | Concentration of HMD added (ppm) | Catalyst recovery (KLL) | Stable emulsion |
| 1 | 0 | 14 | Yes |
| 15 | 250 | 43 | No |
| 16 | 500 | 80 | No |

## Claims

1. A process for recovering diphosphonite-containing compounds from a feed mixture comprising diphosphonite-containing compounds, organic mononitriles and organic dinitriles in a multistage countercurrent liquid-liquid extractor with extraction solvent comprising aliphatic hydrocarbon, cycloaliphatic hydrocarbon or a mixture of aliphatic and cycloaliphatic hydrocarbon, said process comprising:
a) flowing the feed mixture to the first stage of the multistage countercurrent liquid-liquid extractor; and
b) contacting the feed mixture with extraction solvent in the multistage countercurrent liquid-liquid extractor,
wherein the first stage of the multistage countercurrent liquid-liquid extractor comprises a mixing section and a settling section, wherein the mixing section provides a mixed phase comprising a light phase and a heavy phase, wherein a light phase separates from a heavy phase in the settling section, wherein a mixed phase comprising a heavy phase, light phase is present in the settling section between the light phase and the heavy phase, wherein the light phase comprises extraction solvent and extracted diphosphonite-containing compounds, wherein the heavy phase comprises organic mononitriles and organic dinitriles, wherein at least a portion of the light phase is withdrawn from the settling section and treated to recover diphosphonite-containing compounds extracted into the light phase, wherein a first portion of the heavy phase is passed to the second stage of the multistage countercurrent liquid-liquid extractor, and wherein a second portion of the heavy phase is withdrawn from the settling section of the first stage of the multistage countercurrent liquid-liquid extractor and recycled to the settling section of the first stage of the multistage countercurrent liquid-liquid extractor,
wherein the first stage of the multistage countercurrent liquid-liquid extractor takes place in an mixer-settler, wherein the mixer-settler comprises a settling section which is separate from the mixing section, and wherein recycled heavy phase is recycled upstream from the point of withdraw of the recycled heavy phase, wherein the recycled heavy phase is recycled to the settling section in the absence of passing through another liquid-liquid extraction stage.

2. The process of claim 1, wherein the raffinate recycle ratio (RRR) is between 0.1 and 0.9, wherein RRR is defined by the ratio of X to Y, wherein X is the mass per unit time of the second portion of the heavy phase recycled to the settling section of the first stage of the multistage countercurrent liquid-liquid extractor, and wherein Y is the mass per unit time of all of the heavy phase withdrawn from the settling section of the first stage of the multistage countercurrent liquid-liquid extractor.

3. The process of claim 1, wherein the RRR is between 0.2 and 0.8.

4. The process of claim 1, wherein the diphosphonite-containing compound is:
(R¹)(R²-O)P-O-Y-O-P(O-R³)(R⁴) I
where R¹ and R² are each independently identical or different, separate or bridged organic radicals; R³ and R⁴ are each independently identical or different, separate or bridged organic radicals; and Y is a bridging group.

5. The process of claim 1, wherein the diphosphonite-containing compound is selected from the group consisting of: 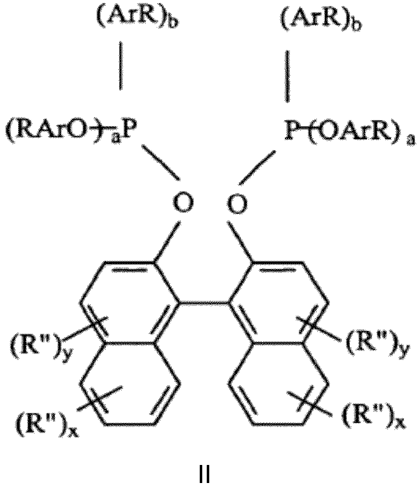 and 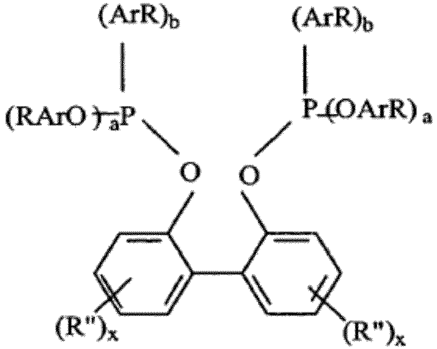 wherein:
x=0 to 4;
y=0 to 2;
a is 1 and b is 1;
each Ar is individually phenyl or naphthyl, and the two Ar groups that are directly or indirectly (through an oxygen) bonded to the same phosphorus atom may be linked to each other by a linking unit selected from the group consisting of direct bond, alkylidene, secondary or tertiary amine, oxygen, sulfide, sulfone, and sulfoxide;
each R is individually hydrogen, ethenyl, propenyl, acryloyl, methacryloyl, an organic radical with a terminal ethenyl, propenyl, acryloyl, or methacryloyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each Ar can be further substituted with linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether;
each R" is individually hydrogen, ethenyl, propenyl, an organic radical with a terminal ethenyl or propenyl group, linear or branched alkyl, cycloalkyl, acetal, ketal, aryl, alkoxy, cycloalkoxy, aryloxy, formyl, ester, fluorine, chlorine, bromine, perhaloalkyl, hydrocarbylsulfinyl, hydrocarbylsulfonyl, hydrocarbylcarbonyl or cyclic ether.

6. The process of claim 5, wherein at least one R represents ethenyl, propenyl, acryloyl, methacryloyl or the organic radical with a terminal ethenyl, propenyl, acryloyl, or methacryloyl group or at least one R" represents ethenyl, propenyl, or the organic radical with a terminal ethenyl or propenyl group.

7. The process of claim 1, wherein the diphosphonite-containing compound is:

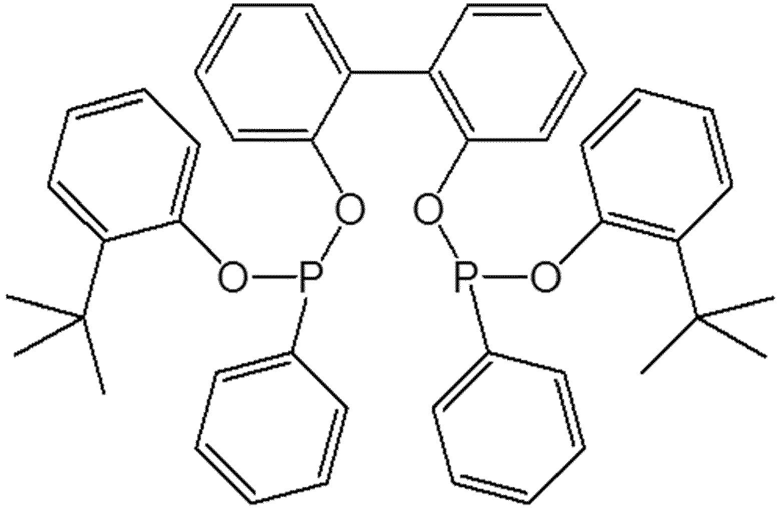

8. The process of claim 1 wherein at least one stage of the extraction is carried out above 40°C.

9. The process of claim 1 wherein at least one stage contains a Lewis base.

10. The process of claim 9 wherein the Lewis base is a monodentate triarylphosphite wherein the aryl groups are unsubstituted or substituted with alkyl groups having 1 to 12 carbon atoms, and wherein the aryl groups may be interconnected.

11. The process of claim 9 wherein the Lewis base is selected from the group consisting of:
a) anhydrous ammonia, pyridine, alkylamine, dialkylamine, trialkylamine wherein the alkyl groups have 1 to 12 carbon atoms; and
b) polyamine.

12. The process of claim 11 wherein the polyamine comprises at least one selected from hexamethylene diamine and dimers and trimers of hexamethylene diamine; and optionally
wherein the polyamine comprises dimers of hexamethylene diamine.

13. The process of claim 9 wherein the Lewis base compound is a basic ion exchange resin.

14. The process of claim 1 wherein the extraction solvent is cyclohexane.

15. The process of claim 1 wherein the feed mixture is an effluent stream from a hydrocyanation process; and optionally
wherein the hydrocyanation process includes a 3-pentenenitrile hydrocyanation process; and optionally
wherein the hydrocyanation process includes a 1,3-butadiene hydrocyanation process.

## Patentansprüche

1. Prozess zur Gewinnung von Diphosphonit-enthaltenden Verbindungen aus einer Beschickungsgemisch, die Diphosphonit-enthaltende Verbindungen, organische Mononitrile und organische Dinitrile umfasst, in einem mehrstufigen Gegenstrom-Flüssig-Flüssig-Extraktor mit einem Extraktionslösungsmittel, das einen aliphatischen Kohlenwasserstoff, einen cycloaliphatischen Kohlenwasserstoff oder ein Gemisch aus aliphatischem und cycloaliphatischem Kohlenwasserstoff umfasst, wobei der Prozess umfasst:
a) Zuführen des Beschickungsgemischs zur ersten Stufe des mehrstufigen Gegenstrom-Flüssig-Flüssig-Extraktors; und
b) Inkontaktbringen des Beschickungsgemischs mit dem Extraktionslösungsmittel im mehrstufigen Gegenstrom-Flüssig-Flüssig-Extraktor,
wobei die erste Stufe des mehrstufigen Gegenstrom-Flüssig-Flüssig-Extraktors einen Mischbereich und einen Absetzbereich umfasst, wobei der Mischbereich eine gemischte Phase bereitstellt, die eine leichte Phase und eine schwere Phase umfasst, wobei sich eine leichte Phase in dem Absetzbereich von einer schweren Phase trennt, wobei eine gemischte Phase, die eine schwere Phase umfasst, in dem Absetzbereich zwischen der leichten Phase und der schweren Phase vorliegt, wobei die leichte Phase ein Extraktionslösungsmittel und extrahierte Diphosphonit enthaltende Verbindungen umfasst, wobei die schwere Phase organische Mononitrile und organische Dinitrile umfasst, wobei zumindest ein Abschnitt der leichten Phase aus dem Absetzabschnitt abgezogen und behandelt wird, um die in die leichte Phase extrahierten Diphosphonit enthaltenden Verbindungen zurückzugewinnen, wobei ein erster Abschnitt der schweren Phase zur zweiten Stufe des mehrstufigen Gegenstrom-Flüssig-Flüssig-Extraktors geführt wird und wobei ein zweiter Abschnitt der schweren Phase aus dem Absetzabschnitt der ersten Stufe des mehrstufigen Gegenstrom-Flüssig-Flüssig-Extraktors abgezogen und zum Absetzabschnitt der ersten Stufe des mehrstufigen Gegenstrom-Flüssig-Flüssig-Extraktors rückgeführt wird,
wobei die erste Stufe des mehrstufigen Gegenstrom-Flüssig-Flüssig-Extraktors in einem Mischer-Abscheider stattfindet, wobei der Mischer-Abscheider einen Absetzbereich umfasst, der von dem Mischbereich getrennt ist, und wobei die rückgeführte schwere Phase stromaufwärts von dem Punkt, an dem die rückgeführte schwere Phase abgezogen wird, rückgeführt wird, wobei die rückgeführte schwere Phase zu dem Absetzbereich in Abwesenheit des Durchlaufens einer anderen Flüssig-Flüssig-Extraktionsstufe rückgeführt wird.

2. Prozess nach Anspruch 1, wobei das Raffinat-Rückführungsverhältnis (RRR) zwischen 0,1 und 0,9 liegt, wobei RRR durch das Verhältnis von X zu Y definiert ist, wobei X die Masse pro Zeiteinheit des zweiten Abschnitts der schweren Phase ist, die in den Absetzabschnitt der ersten Stufe des mehrstufigen Gegenstrom-Flüssig-Flüssig-Extraktors rückgeführt wird, und wobei Y die Masse pro Zeiteinheit der gesamten schweren Phase ist, die aus dem Absetzabschnitt der ersten Stufe des mehrstufigen Gegenstrom-Flüssig-Flüssig-Extraktors abgezogen wird.

3. Prozess nach Anspruch 1, wobei das RRR zwischen 0,2 und 0,8 liegt.

4. Prozess nach Anspruch 1, wobei die Diphosphonit enthaltende Zusammensetzung Folgende ist:
(R¹)(R²-O)P-O-Y-O-P(O-R³)(R⁴) I
wobei R¹ und R² jeweils unabhängig identische oder unterschiedliche, getrennte oder überbrückte organische Radikale sind; R³ und R⁴ jeweils unabhängig identische oder unterschiedliche, getrennte oder überbrückte organische Radikale sind; und Y eine brückenbildende Gruppe ist.

5. Prozess nach Anspruch 1, wobei die Diphosphonit enthaltende Zusammensetzung ausgewählt ist aus der Gruppe, bestehend aus: 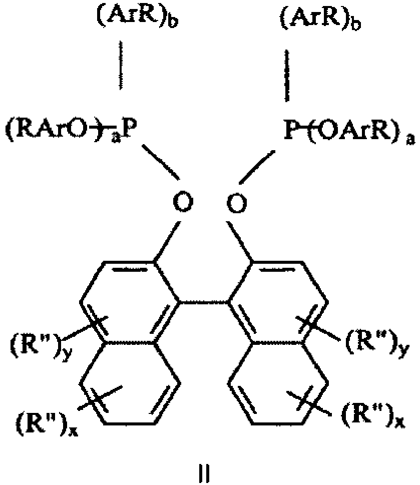 und 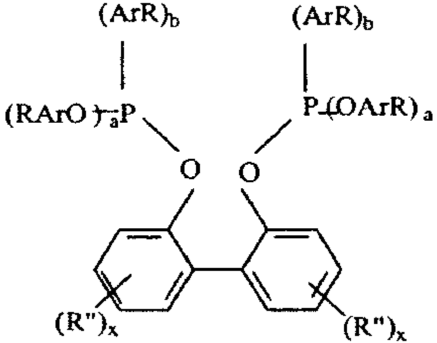 wobei:
x=0 bis 4;
y=0 bis 2;
a gleich 1 und b gleich 1 ist;
jedes Ar individuell Phenyl oder Naphthyl ist, und die zwei Ar-Gruppen, die direkt oder indirekt (über ein Sauerstoff-Atom) an das gleiche Phosphor-Atom gebunden sind, durch eine Verbindungseinheit untereinander verbunden werden können, die ausgewählt ist aus der Gruppe, bestehend aus direkter Bindung, Alkyliden, Sekundär- oder Tertiär-Amin, Sauerstoff, Sulfid, Sulfon und Sulfoxid;
jedes R einzeln Wasserstoff, Ethenyl, Propenyl, Acryloyl, Methacryloyl, ein organischer Rest mit einer endständigen Ethenyl-, Propenyl-, Acryloyl- oder Methacryloylgruppe, lineares oder verzweigtes Alkyl, Cycloalkyl, Acetal, Ketal, Aryl, Alkoxy, Cycloalkoxy, Aryloxy, Formyl, Ester, Fluor, Chlor, Brom, Perhalogenalkyl, Hydrocarbylsulfinyl, Hydrocarbylsulfonyl, Hydrocarbylcarbonyl oder cyclischer Ether ist;
jedes Ar weiter mit linearem oder verzweigtem Alkyl, Cycloalkyl, Acetal, Ketal, Aryl, Alkoxy, Cycloalkoxy, Aryloxy, Formyl, Ester, Fluor, Chlor, Brom, Perhalogenalkyl, Hydrocarbylsulfinyl, Hydrocarbylsulfonyl, Hydrocarbylcarbonyl oder cyclischem Ether substituiert sein kann;
jedes R" einzeln Wasserstoff, Ethenyl, Propenyl, ein organischer Rest mit einer endständigen Ethenyl- oder Propenylgruppe, lineares oder verzweigtes Alkyl, Cycloalkyl, Acetal, Ketal, Aryl, Alkoxy, Cycloalkoxy, Aryloxy, Formyl, Ester, Fluor, Chlor, Brom, Perhalogenalkyl, Hydrocarbylsulfinyl, Hydrocarbylsulfonyl, Hydrocarbylcarbonyl oder cyclischer Ether ist.

6. Prozess nach Anspruch 5, wobei mindestens ein R Ethenyl, Propenyl, Acryloyl, Methacryloyl oder das organische Radikal mit einer endständigen Ethenyl-, Propenyl-, Acryloyl- oder Methacryloyl-Gruppe darstellt oder mindestens ein R" Ethenyl, Propenyl oder das organische Radikal mit einer endständigen Ethenyl- oder Propenyl-Gruppe darstellt.

7. Prozess nach Anspruch 1, wobei die Diphosphonit enthaltende Zusammensetzung Folgende ist:

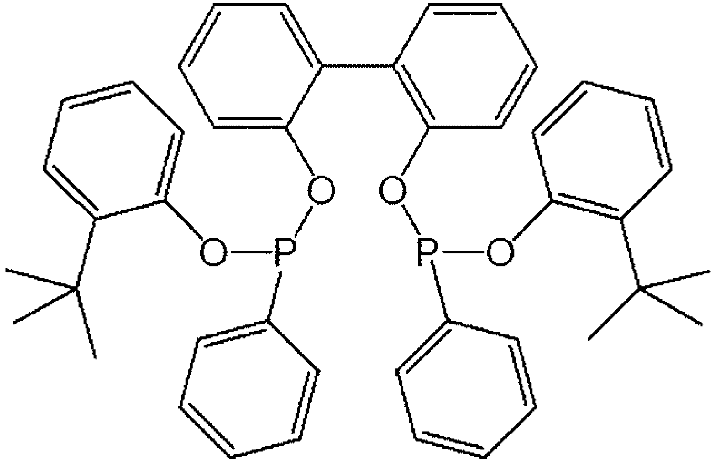

8. Prozess nach Anspruch 1, wobei mindestens eine Stufe der Extraktion bei über 40 °C durchgeführt wird.

9. Prozess nach Anspruch 1, wobei mindestens eine Stufe eine Lewis-Base enthält.

10. Prozess nach Anspruch 9, wobei die Lewis-Base ein einzähniges Triarylphosphit ist, wobei die Arylgruppen unsubstituiert oder mit Alkylgruppen mit 1 bis 12 Kohlenstoffatomen substituiert sind und wobei die Arylgruppen miteinander verbunden sein können.

11. Prozess nach Anspruch 9, wobei die Lewis-Base ausgewählt ist aus der Gruppe bestehend aus:
a) wasserfreiem Ammoniak, Pyridin, Alkylamin, Dialkylamin, Trialkylamin, wobei die Alkylgruppen 1 bis 12 Kohlenstoffatome aufweisen; und
b) Polyamin.

12. Prozess nach Anspruch 11, wobei das Polyamin mindestens eines umfasst, das aus Hexamethylendiamin und Dimeren und Trimeren von Hexamethylendiamin ausgewählt ist; und optional
wobei das Polyamin Dimere von Hexamethylendiamin umfasst.

13. Prozess nach Anspruch 9, wobei die Lewis-Base-Verbindung ein basisches lonenaustauscherharz ist.

14. Prozess nach Anspruch 1, wobei das Extraktionslösungsmittel Cyclohexan ist.

15. Prozess nach Anspruch 1, wobei es sich bei dem Beschickungsgemisch um einen Abflussstrom aus einem Hydrocyanierungsprozess handelt; und
wobei der Hydrocyanierungsprozess optional einen 3-Pentennitril-Hydrocyanierungsprozess umfasst; und optional
wobei der Hydrocyanierungsprozess einen 1,3-Butadien-Hydrocyanierungsprozess einschließt.

## Revendications

1. Processus de récupération de composés contenant du diphosphonite à partir d'un mélange d'alimentation comprenant des composés contenant du diphosphonite, des mononitriles organiques et des dinitriles organiques dans un extracteur liquide-liquide à contre-courant multi-étagé avec un solvant d'extraction comprenant un hydrocarbure aliphatique, un hydrocarbure cycloaliphatique ou un mélange d'un hydrocarbure aliphatique et d'un hydrocarbure cycloaliphatique, ledit processus comprenant :
a) l'écoulement du mélange d'alimentation vers le premier étage de l'extracteur liquide-liquide à contre-courant multi-étagé ; et
b) la mise en contact du mélange d'alimentation avec le solvant d'extraction dans l'extracteur liquide-liquide à contre-courant multi-étagé,
dans lequel le premier étage de l'extracteur liquide-liquide à contre-courant multi-étagé comprend une section de mélange et une section de décantation, dans lequel la section de mélange fournit une phase mixte comprenant une phase légère et une phase lourde, dans lequel une phase légère se sépare d'une phase lourde dans la section de décantation, dans lequel une phase mixte comprenant une phase lourde, une phase légère est présente dans la section de décantation entre la phase légère et la phase lourde, dans lequel la phase légère comprend un solvant d'extraction et des composés contenant de la diphosphonite extraits, dans lequel la phase lourde comprend des mononitriles organiques et des dinitriles organiques, dans lequel au moins une partie de la phase légère est retirée de la section de décantation et traitée pour récupérer les composés contenant de la diphosphonite extraits dans la phase légère, dans lequel une première partie de la phase lourde passe au deuxième étage de l'extracteur liquide-liquide à contre-courant à plusieurs étages, et dans lequel une seconde partie de la phase lourde est retirée de la section de décantation du premier étage de l'extracteur liquide-liquide à contre-courant multi-étagé et recyclée dans la section de décantation du premier étage de l'extracteur liquide-liquide à contre-courant multi-étagé,
dans lequel le premier étage de l'extracteur liquide-liquide à contre-courant multi-étagé a lieu dans un mélangeur-décanteur, dans lequel le mélangeur-décanteur comprend une section de décantation qui est séparée de la section de mélange, et dans lequel la phase lourde recyclée est recyclée en amont du point de retrait de la phase lourde recyclée, dans lequel la phase lourde recyclée est recyclée vers la section de décantation en l'absence de passage par un autre étage d'extraction liquide-liquide.

2. Processus selon la revendication 1, dans lequel le rapport de recyclage de raffinat (RRR) est entre 0,1 et 0,9, dans lequel le RRR est défini par le rapport de X à Y, dans lequel X est la masse par unité de temps de la seconde partie de la phase lourde recyclée vers la section de décantation du premier étage de l'extracteur liquide-liquide à contre-courant multi-étagé, et dans lequel Y est la masse par unité de temps de toute la phase lourde retirée de la section de décantation du premier étage de l'extracteur liquide-liquide à contre-courant multi-étagé.

3. Processus selon la revendication 1, dans lequel le RRR est entre 0,2 et 0,8.

4. Processus selon la revendication 1, dans lequel le composé contenant du diphosphonite est :
(R¹)(R²-O)P-O-Y-O-P(O-R³)(R⁴) I
où R¹ et R² sont chacun indépendamment des radicaux organiques identiques ou différents, séparés ou pontés ; R³ et R⁴ sont chacun indépendamment des radicaux organiques identiques ou différents, séparés ou pontés ; et Y est un groupe de pontage.

5. Processus selon la revendication 1, dans lequel le composé contenant du diphosphonite est sélectionné dans le groupe consistant en : 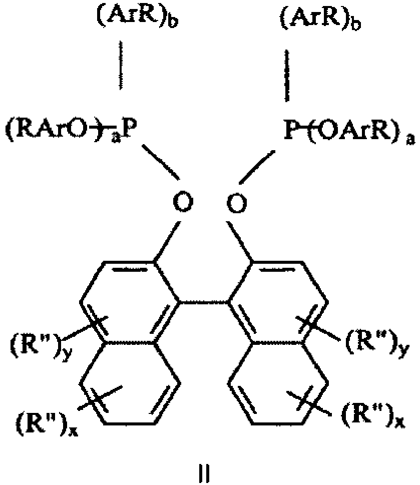 et 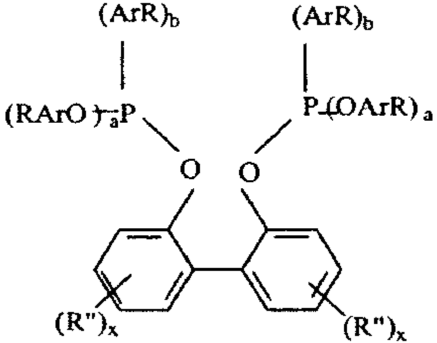 dans lequel :
x = 0 à 4;
y = 0 à 2 ;
a est 1 et b est 1 ;
chaque Ar est individuellement un phényle ou un naphtyle, et les deux groupes Ar qui sont liés directement ou indirectement (par l'intermédiaire d'un oxygène) au même atome de phosphore peuvent être reliés l'un à l'autre par une unité de liaison sélectionnée dans le groupe consistant en une liaison directe, un alkylidène, un amine secondaire ou tertiaire, un oxygène, un sulfure, une sulfone, et un sulfoxyde ;
chaque R est individuellement un hydrogène, un éthényle, un propényle, un acryloyle, un méthacryloyle, un radical organique avec un groupe terminal éthényle, propényle, acryloyle ou méthacryloyle, un alkyle, cycloalkyle, acétal, cétal, aryle, alcoxy, cycloalcoxy, aryloxy, formyle, ester, fluor, chlore, brome, perhaloalkyle, hydrocarbylsulfinyle, hydrocarbylsulfonyle, hydrocarbylcarbonyle linéaire ou ramifié ou un éther cyclique ;
chaque Ar peut être en outre substitué par un alkyle, cycloalkyle, acétal, cétal, aryle, alcoxy, cycloalcoxy, aryloxy, formyle, ester, fluor, chlore, brome, perhaloalkyle, hydrocarbylsulfinyle, hydrocarbylsulfonyle, hydrocarbylcarbonyle linéaire ou ramifié ou un éther cyclique ;
chaque R" est individuellement un hydrogène, un éthényle, un propényle, un radical organique avec un groupe terminal éthényle ou propényle, un alkyle, cycloalkyle, acétal, cétal, aryle, alcoxy, cycloalcoxy, aryloxy, formyle, ester, fluor, chlore, brome, perhaloalkyle, hydrocarbylsulfinyle, hydrocarbylsulfonyle, hydrocarbylcarbonyle linéaire ou ramifié ou un éther cyclique.

6. Processus selon la revendication 5, dans lequel au moins un R représente un éthényle, un propényle, un acryloyle, un méthacryloyle ou le radical organique avec un groupe terminal éthényle, propényle, acryloyle, ou méthacryloyle ou au moins un R" représente un éthényle, un propényle, ou le radical organique avec un groupe terminal éthényle ou propényle.

7. Processus selon la revendication 1, dans lequel le composé contenant du diphosphonite est :

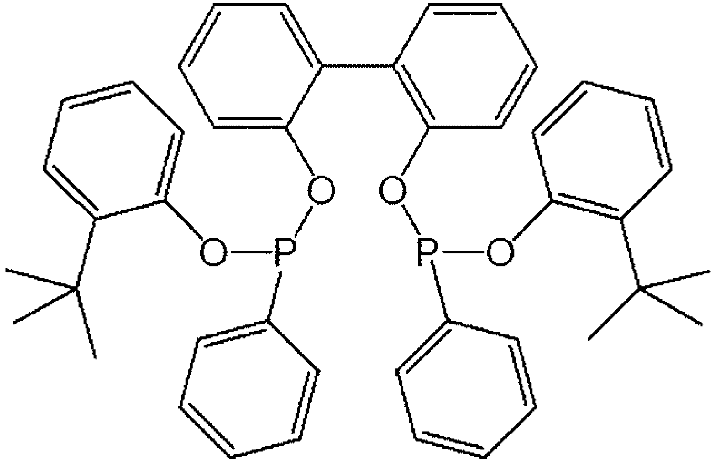

8. Processus selon la revendication 1 dans lequel au moins un étage de l'extraction est réalisé à plus de 40 °C.

9. Processus selon la revendication 1, dans lequel au moins un étage contient une base de Lewis.

10. Processus selon la revendication 9 dans lequel la base de Lewis est un triarylphosphite monodenté, dans lequel les groupes aryle sont non substitués ou substitués par des groupes alkyle présentant 1 à 12 atomes de carbone, et dans lequel les groupes aryle peuvent être interconnectés.

11. Processus selon la revendication 9, dans lequel la base de Lewis est sélectionnée dans le groupe consistant en :
a) ammoniac anhydre, pyridine, alkylamine, dialkylamine, trialkylamine dans lequel les groupes alkyle présentent 1 à 12 atomes de carbone ; et
b) polyamine.

12. Processus selon la revendication 11, dans lequel la polyamine comprend au moins un sélectionné parmi de l'hexaméthylènediamine et des dimères et des trimères d'hexaméthylènediamine ; et facultativement
dans lequel la polyamine comprend des dimères d'hexaméthylène diamine.

13. Processus selon la revendication 9, dans lequel le composé de base de Lewis est une résine échangeuse d'ions basique.

14. Processus selon la revendication 1 dans lequel le solvant d'extraction est du cyclohexane.

15. Processus selon la revendication 1, dans lequel le mélange d'alimentation est un flux d'effluent issu d'un processus d'hydrocyanation ; et facultativement
dans lequel le processus d'hydrocyanation inclut un processus d'hydrocyanation de 3-penténenitrile ; et facultativement
dans lequel le processus d'hydrocyanation inclut un processus d'hydrocyanation de 1,3-butadiène.
